# EUROPEAN PATENT SPECIFICATION

(11) **EP 3 000 720 B1**
(45) Date of publication and mention of the grant of the patent: **19.06.2019**
(21) Application number: 14400043.7
(22) Date of filing: 23.09.2014
(51) Int. Cl.: B64C 1/14

(54) **Aircraft door actuator system**
Flugzeugtürbetätigungssystem
Système d'actionneur de porte d'aéronef

(43) Date of publication of application: 30.03.2016
(73) Proprietor: AIRBUS HELICOPTERS DEUTSCHLAND GmbH, 86609 Donauwörth (DE)
(72) Inventor: Pichlmaier, Claus, 83512 Wasserburg am Inn (DE); Kirchner, Marc, 86609 Donauwörth (DE)
(74) Representative: GPI & Associés

(56) References cited:
- EP-A1- 2 644 495
- DE-B4- 10 161 562

## Description

The invention is related to an actuator system for an actuatable door, said actuator system comprising the features of claim 1. The invention is further related to an aircraft having such an actuatable door, said aircraft comprising the features of claim 13.

In general, aircraft doors fulfil the following major functions: They provide access for passengers and crew members to an aircraft cabin of the aircraft and allow evacuation of the aircraft cabin in an emergency case. Additionally, the actuatable doors also carry, unfold and inflate slides used to evacuate the passengers from the aircraft in case of an emergency.

EASA CS 25.807 distinguishes between different types of emergency exits for passenger aircrafts with regard to an underlying capacity of passengers. For type A doors a maximum of 110 passengers is allowed and for type B doors a maximum of 75 passengers is allowed (FAR 25.807). Within a given evacuation time of 90 seconds passengers and crew members must be able to leave the aircraft. For this purpose, aircraft doors are usually designed such that opening of a given aircraft door - including inflation of an associated slide - is performed in at most 10 seconds.

Different means of power assisted opening devices are used to enable such a comparatively short door opening time. Basically, a translational or a rotary power opening device can be used. The majority of all aircraft doors are equipped with a pneumatic actuator system having a pneumatic cylinder as working element and a pressure pot as energy storage. Alternatively, a mechanical spring can be used as energy storage and a simple linear slide can be used as working element. Furthermore, rotary systems can be used with a condenser as energy storage and an electric drive as working element. Moreover, gas motor systems can be used, which use an explosive as energy storage.

More generally, a basic opening motion for opening of a given aircraft door usually follows the principle of initial inward movement and is split into two phases: a first phase consisting in a lifting movement that is mainly directed in vertical direction, and a second phase consisting in a swivel motion in the form of a horizontal rotation. This swivel motion is provided by an underlying coupling-curve of a so-called four-joint-gear. This gear is realized by two levers, i.e. a parallel lever and a hinge arm, and a corresponding door leaf as linkage.

If a pneumatic actuator system is used to assist in door opening of such a given aircraft door and to provide enough force to drop the slide from its packed position on the door, a pneumatic cylinder of the pneumatic actuator system is typically located parallel to one lever of the four-joint-gear and functions as drive of this four-joint-gear. Another mechanical element is used to transfer its axial force into the aircraft door structure.

In operation, the pneumatic cylinder pushes the aircraft door from an unlocked, unlatched, lifted but closed position to an opened position, wherein an underlying push-actuation mode creates discrete forces in the aircraft door structure. Especially in case of a blockage during the power assisted opening, the aircraft door structure has to carry discrete forces without damage. These discrete forces may be a problem for certain door system layouts, especially for door structures made from Carbon Fiber Reinforced Plastic (CFRP).

The document DE 101 61 562 B4 describes an aircraft door that uses a pneumatic actuator system with a pneumatic cylinder as working element and a pressure pot as energy storage. A door latching requires a vertical movement of a door leaf of an aircraft cabin door. A mechanical element is connected in a rotatable manner to the aircraft cabin door as well as to the pneumatic actuator system. Since a given distance between the pneumatic actuator system and the mechanical element changes during a given lift motion, the mechanical element is realized as telescopic rod used to compensate the door vertical movement during its opening cycle and to introduce corresponding actuator forces into the door leaf. The door leaf distributes the forces to different bearing points. One bearing point is an underlying pivot point of the parallel levers in the top of the aircraft door. The other bearing point is the mechanical connection of the connecting links to the aircraft door. The working element is positioned parallel to the hinge arm as a lever of a four-joint-gear.

This arrangement creates the following load path: The source of the force is the pneumatic cylinder which changes the pressure energy into an axial force. This force will be applied to the telescopic rod and acts on the door leaf. The actuator load acting on the door leaf creates a load path via the connecting links and the hinge arm back to the origin of the force.

A major disadvantage of this pneumatic actuator system is the introduction of a discrete load into the door leaf, especially a discrete load with a vertical component, if the door is closed and the pneumatic actuator system is under power, i.e. a typical case of misuse. Further disadvantages are the length of the load path, the usage of the telescopic rod and the application of the vertical load-component. Especially in a CFRP door the local introduction of a high force causes the need for local reinforcements that are typically made from titanium and create high costs and extra weight.

The coupling of the swivel and the lift system and the application of a telescopic rod create another major disadvantage with respect to the basic kinematic system. Generally the basic kinematic system is in a non-defined status as a movement in the telescopic rod can be initiated by the lift or the swivel motion or a mix of both. The basic kinematic system is defined if preconditions, such as extra boundary conditions, are fulfilled. Such preconditions are as follows: the telescopic rod is fully compressed and blocked by a physical stop, or the telescopic rod is fully extended and blocked by a physical stop. In order to make the intermediate condition between compressed and extended condition predictable, a spring unit is required.

Based on the fact that the system status is generally non-defined, the disadvantage is that the basic kinematic system design process is complex and requests iterative loops to deliver a properly working unit. In addition, it is known from previous designs that the non-defined status is also critical at the end of a door emergency opening motion. More specifically, before the aircraft door reaches its end position in the opened position, the basic kinematic system needs to be decelerated. The non-defined nominal status, caused by the spring loaded telescopic rod, complicates the controlled deceleration of the aircraft door, i.e. damping device.

As described above, alternative to a pressure pot mechanical springs can be used as energy storage and a linear slide can provide a required axial force at the place of a pneumatic cylinder as working element. However, in this case a major disadvantage consists in the energy density of the mechanical springs. More specifically, if the springs are made from metal, an underlying actuator system is not competitive in comparison to the existing solutions. If the actuator system uses CFRP spring elements, the technical challenge is even greater and evidence is required that no creeping effect will decrease the single spring force during the lifetime of the actuator system.

The document DE 102 58 105 B4 describes a rotary electric motor system, i.e. a motor and a constant gear, arranged in such a way that any acting torsion moment is created by an electrical engine and applied directly in the rotation axis of the system. The aircraft door uses a four-joint-gear as basic swivel kinematics. The drive for this system is provided by the electrical engine that includes the constant gear to adjust the force as well as the opening time. The motor applies its opening moment directly into the rotational axis (main swivel axis) of the system so that the aircraft door is no longer pushed to open, but it is rotated to open.

This rotary electric motor system has been developed for a day to day application of a big and heavy door, i.e. the door movement is power assisted at any time. In case of an emergency opening the power level is increased so that the full door movement is achieved by the system. There are consequences for this rotary electric motor system with regard to durability and the weight of the energy storage as well as with regard to the reactive-moments. Since all the opening torque is provided by only one axis, a situation of local load concentration occurs. In the end, heavy and costly brackets are required to react the torsion moment. In addition to that the motor-gear unit consumes a lot of volume in a volume-sensitive area of the door system.

The document DE 10 2008 014 691 A1 describes a rotary gas motor system together with an explosive. Instead of a condenser the system is powered by an explosive material that reacts relatively slowly, so that energy in the form of expanding gas volume is produced over the opening time. The expanding gas is transferred via a gas engine and a gear into a torsion moment. The gas motor is arranged so that the torsion moment acts directly on the rotation axis of the swivel system.

This gas motor system also suffers from the limited available space as well as from reacting torsion moments. Furthermore, the acceptance by airliners and/or by passengers of explosives in an aircraft cabin has to be seen as critical. In addition thereto, it is known from other industries that the spare-logistics for explosive material are difficult and costly.

The document US 5,379,971 describes a chain actuator system, which is powered by a pneumatic linear actuator. This system combines the pneumatic linear working element with a rotary opening of the door. The chain system shows advantages from the point of load introduction, as the torsion moment is applied symmetrically via two axes.

However, the chain system uses a high number of single parts in total. Thus, it is heavy, expensive and difficult to maintain.

The document DE 40 22 067 C2 describes use of a rotary motor system external from the aircraft door system, which is accommodated in a given airframe. To open an aircraft cabin door from outside, the airframe may be seen as advantageous from a product side. But from a technical administration point of view a high number of internal interfaces is created. These interfaces are difficult to manage before the system reaches an acceptable level of performance. Furthermore, the available space in the area surrounding the aircraft cabin door is extremely limited and, consequently, restricts application of the aircraft door system.

The document EP 2 644 495 A1 describes another actuator system for an actuatable door that comprises a four-joint-gear. More specifically, this actuator system is designed as an emergency opening system of an actuatable aircraft cabin door that is mounted in an aircraft fuselage structure and comprises a flexed, stiff hinge arm. The latter is pivotally supported in the aircraft fuselage structure with an associated fuselage flank and pivotally supported in the aircraft cabin door with an associated door flank that is opposed to the fuselage flank of the flexed hinge arm. A linear power cylinder is designed as a pneumatic actuator that is adapted to assist opening of the aircraft cabin door by means of a gas operated actuating element, e.g. an actuating rod. This power cylinder is mounted with a fixed end to the fuselage flank of the flexed hinge arm.

The actuating rod is oriented essentially parallel to the door flank of the flexed hinge arm and connected to an actuator joint of the four-joint-gear for driving a fork lever of this four-joint-gear that is linked to the actuator joint. A bell crank of the four-joint-gear is pivotally mounted to a hinge joint of the four-joint-gear, which is fixed to the door flank of the stiff hinge arm. The bell crank is pivotally mounted to the actuator joint for the drivable fork lever.

The four-joint-gear further comprises a coupling lever that is pivotally mounted to the drivable fork lever at a coupling joint of the four-joint-gear. This coupling lever is mounted in a hinge of the four-joint-gear at the hinge arm by means of a respective torsion bolt, which drivingly connects the actuator system to the aircraft cabin door for rotation of the latter relative to the hinge arm and relative to the aircraft fuselage structure.

However, this actuator system also uses a comparatively high number of single constituent components in total, which have at least partly more or less complex forms, so that the overall actuator system is heavy, expensive and difficult to maintain. Furthermore, from a technical administration point this comparatively high number of single constituent components results in a comparatively high number of internal interfaces that are difficult to manage before the actuator system reaches an acceptable level of performance. Moreover, the available space in the area surrounding the aircraft cabin door is extremely limited and, thus, not suitable to accommodate large-volume actuator systems.

It is, therefore, an object of the present invention to provide a new actuator system for an actuatable door that comprises less constituent components, is easier to maintain and comparatively inexpensive to manufacture. Furthermore, it is an object of the present invention to provide a new aircraft having an actuatable cabin door comprising such a new actuator system.

This object is solved by an aircraft door actuator system for an actuatable door, said aircraft door actuator system comprising the features of claim 1.

More specifically, according to the invention an actuator system for an actuatable door comprises a stiff hinge arm with a door flank and a mounting structure flank. Said stiff hinge arm is adapted to pivotally support said actuatable door at said door flank and to be pivotally mounted to an associated door mounting structure at said mounting structure flank. An actuator with a pneumatically operatable actuating rod is provided for assisting opening of said actuatable door in a mounted state upon activation. Said actuator comprises a fixed end that is mounted to said stiff hinge arm, and said pneumatically operatable actuating rod comprises a coupling rod joint that is connected to a door opening drive gear. Said door opening drive gear is provided with at least one coupling rod that is connected to said coupling rod joint and mounted to at least one torque lever. Said at least one torque lever is pivotally mounted in at least one hinge of said stiff hinge arm by means of at least one torsion bolt of said door opening drive gear. Said at least one torsion bolt is drivingly connectable to said actuatable door by means of an associated connection link that is pivotally mounted to said at least one torsion bolt.

Thus, the present invention provides a new architecture for an actuator system, which is preferably embodied as a direct drive actuator system with a door opening drive gear that is preferably embodied as a direct drive gear. This direct drive actuator system comprises two fully independent systems: a first system that comprises a door opening mechanism which moves essentially vertical to a longitudinal axis of the direct drive actuator system for door opening, and a second system that comprises a swivelling mechanism, which provides movement in a horizontal plane, i.e. a plane that is perpendicular to a respective door plane, for door swivelling of approximately 130° around an associated main swivel axis. The latter is defined by the one or more torsion bolts of the direct drive actuator system as the axis between the stiff hinge arm and the one or more torque levers.

According to one aspect, the direct drive actuator system is embodied such that an associated actuatable door is pushed to open by means of a linear pneumatic actuator. The latter provides a linear force that is transformed into a rotational moment, which is applied on the main swivel axis of the direct drive actuator system. Therefore, the linear pneumatic actuator is directly coupled by means of an actuating rod to the swivelling mechanism that is provided with suitable swivel kinematics. Advantageously, the actuating rod does not need to be implemented as a telescopic rod.

More specifically, the actuating rod is preferably connected to the main swivel axis with at least one torque lever to allow creation of an opening momentum that is required for door opening during opening swivel motion, which is advantageous compared to a translational door opening movement. Thus, a vertical lifting movement of the associated actuatable door can be compensated.

Advantageously, an opening load generated by the inventive direct drive actuator system in operation for opening of an associated actuatable door is not distributed through the actuatable door itself. Instead, all actuator forces are applied on the direct drive gear and reacted via corresponding lugs of the stiff hinge arm back to an actuator lug of the stiff hinge arm. Accordingly, fewer components of the inventive direct drive actuator system are affected by the actuator forces, compared to conventional actuator systems, so that at least less components need to be designed to the load level of the linear pneumatic actuator.

Alternatively, such components can be omitted in the inventive direct drive actuator system. This is particularly relevant in the case of CFRP actuatable door structures, where a number of parts that are otherwise required to distribute the actuator forces into the structures are obsolete when applying the inventive direct drive actuator system.

Furthermore, from a kinematic point of view the inventive direct drive actuator system is not under-constrained. More specifically, compared to conventional actuator systems, the inventive direct drive actuator system has a reduced number of degrees of freedom. Thus, corresponding development efforts are advantageously reduced to a minimum. However, many possible conditions have still to be considered e.g. for clearance reasons, actuation timing, safety and mechanism functionality.

According to a preferred embodiment, said at least one coupling rod is provided as a linear cylindrical shaft.

According to a further preferred embodiment, said at least one torque lever is provided as a linear flat connecting arm.

According to a further preferred embodiment, said at least one torsion bolt defines a main swivel axis for rotation of said at least one torque lever in operation, said main swivel axis being at least approximately parallel to said at least one coupling rod.

According to a further preferred embodiment, said pneumatically operatable actuating rod is adapted to move said at least one coupling rod upon activation linearly in a direction that is at least approximately perpendicular to a longitudinal extension of said at least one coupling rod, wherein said at least one coupling rod rotates said at least one torque lever around said main swivel axis.

According to a further preferred embodiment, said actuator comprises a pressure pot for actuation of said pneumatically operatable actuating rod in operation.

According to a further preferred embodiment, said at least one torque lever comprises at least a first torque lever and a second torque lever, said first torque lever being connected to a first axial end of said at least one coupling rod and said second torque lever being connected to a second axial end of said at least one coupling rod.

According to one aspect, the actuating rod applies, in operation upon actuation, an actuator force to the coupling rod, which distributes the applied actuator force to the first and second torque levers that are directly connected to corresponding torsion bolts defining the main swivel axis. The distributed actuator force creates a rotational moment, which is applied to corresponding connection links such that the door opening swivel motion is generated. This rotational moment is advantageously applied at two different positions of the same main swivel axis, i.e. the corresponding torsion bolts.

According to a further preferred embodiment, said first and second torque levers are arranged at least approximately parallel to each other and at least approximately perpendicular to said at least one coupling rod.

According to a further preferred embodiment, said at least one coupling rod is rotatably mounted to said coupling rod joint by means of an associated plain bearing.

According to a further preferred embodiment, said at least one coupling rod is rotatably mounted to said at least one torque lever by means of an associated spherical bearing.

According to a further preferred embodiment, said fixed end of said actuator is rotatably mounted to said stiff hinge arm.

According to a further preferred embodiment, said actuatable door is an aircraft cabin door and said associated door mounting structure is an aircraft fuselage structure.

Thus, the inventive direct drive actuator system can advantageously be used e.g. as an emergency opening system in an aircraft. It should, however, be noted that application of the inventive direct drive actuator system to aircraft cabin doors is merely described by way of example and not for limiting the invention accordingly. Instead, the inventive direct drive actuator system can be applied to various actuatable doors, in particular in vessels such as ships and so on.

The present invention further provides an aircraft with an aircraft fuselage structure and an actuatable cabin door. Said aircraft comprises an actuator system for actuation of said actuatable cabin door. Said actuator system comprises a stiff hinge arm with a door flank and a fuselage flank, said stiff hinge arm being pivotally supporting said actuatable cabin door at said door flank and being pivotally mounted to said aircraft fuselage structure at said fuselage flank. An actuator with a pneumatically operatable actuating rod is provided for assisting opening of said actuatable cabin door upon activation. Said actuator comprises a fixed end that is mounted to said stiff hinge arm, and said pneumatically operatable actuating rod comprises a coupling rod joint that is connected to a door opening drive gear. Said door opening drive gear is provided with at least one coupling rod that is connected to said coupling rod joint and mounted to at least one torque lever. Said at least one torque lever is pivotally mounted in at least one hinge of said stiff hinge arm by means of at least one torsion bolt of said door opening drive gear. Said at least one torsion bolt is drivingly connected to said actuatable cabin door by means of an associated connection link that is pivotally mounted to said at least one torsion bolt.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a schematic view of an actuator system for an actuatable door according to the invention,
- Figure 2 shows a perspective view of the actuator system of Figure 1,
- Figure 3 shows a top view of the actuator system of Figure 1 and Figure 2, and
- Figure 4 shows a perspective view of an aircraft having an actuatable aircraft cabin door that is provided with the actuator system of Figure 1 and Figure 2.

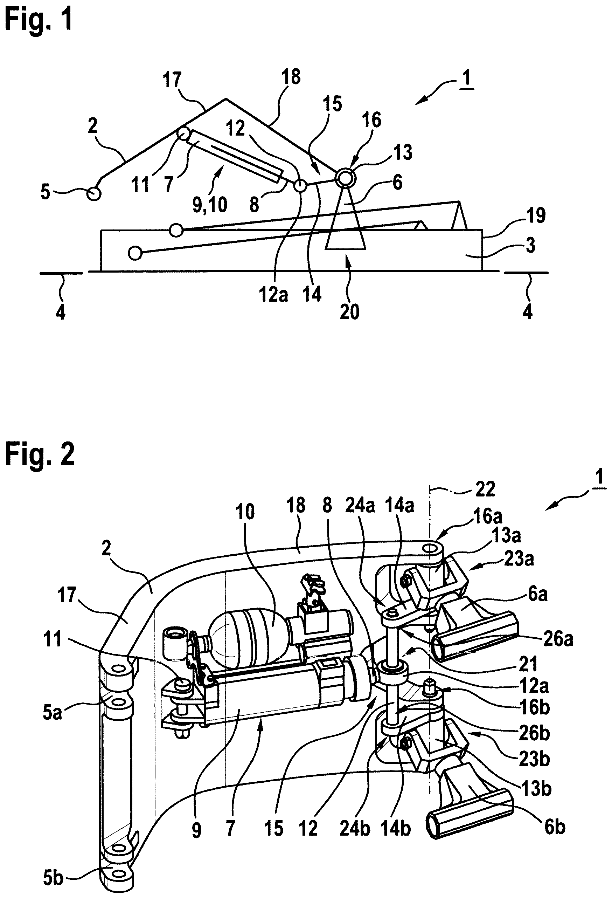

Figure 1 shows an actuator system 1 for an actuatable door 3 according to the present invention. The actuator system 1 is preferably adapted for supporting door opening, e.g. in emergency cases, and can, thus, be applied in an emergency opening system. The actuatable door 3 is preferably adapted to close an associated door mounting structure 4, preferentially in a fluid-tight manner. Illustratively, the actuatable door 3 is provided with a door leaf 19.

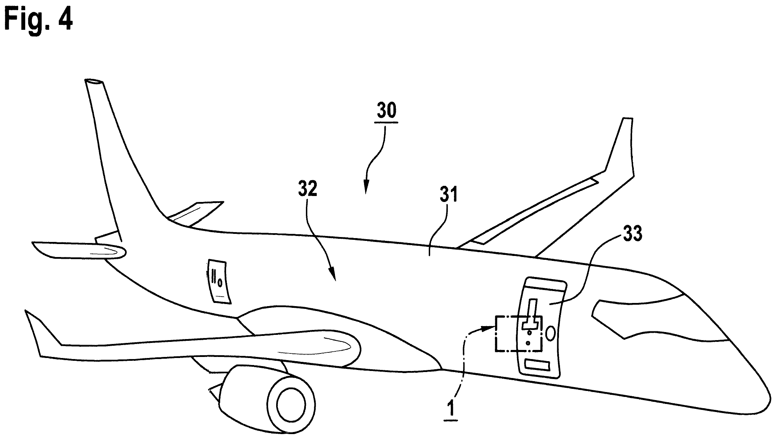

By way of example, the actuatable door 3 is an aircraft cabin door (33 in Figure 4) and the associated door mounting structure 4 is an aircraft fuselage structure (31 in Figure 4) of an aircraft (30 in Figure 4). However, as already mentioned above the actuator system 1 can similarly be applied to various other actuatable doors, in particular actuatable doors in vessels, such as ships and so on.

The actuator system 1 illustratively comprises a stiff hinge arm 2 with a mounting structure flank 17 and a door flank 18. Preferably, the stiff hinge arm 2 is adapted to be pivotally mounted to the associated door mounting structure 4 at the mounting structure flank 17 by means of suitable door mounting structure bearings 5, and to pivotally support the actuatable door 3 at the door flank 18 by means of suitable connection links 6. The actuatable door 3 is preferably connected to the suitable connection links 6 by means of an application-specific door leaf connecting structure 20. It should, however, be noted that mounting of the stiff hinge arm 2 to the actuatable door 3 and to the associated door mounting structure 4 is well-known by the person skilled in the art, so that a detailed description thereof can be omitted for brevity and conciseness of the description.

According to one aspect, the actuator system 1 comprises an actuator 7 with a pneumatically operatable actuating rod 8 implementing a working element that is provided for assisting opening of the actuatable door 3 in a mounted state upon activation. This actuator 7 is also referred to as a "linear pneumatic actuator".

The linear pneumatic actuator 7 preferably comprises a pneumatic cylinder 9 with a fixed end 11 that is rotatably mounted to the stiff hinge arm 2. The pneumatic cylinder 9 is preferentially adapted to accommodate the pneumatically operatable actuating rod 8 at least essentially in a retracted state, as illustrated. Furthermore, the pneumatic cylinder 9 is coupled to an energy storage that is adapted to provide in operation upon activation pneumatic energy for pushing the pneumatically operatable actuating rod 8 out of the pneumatic cylinder 9 into an extended state. By way of example, this energy storage is embodied as a pressure pot 10.

According to one aspect, the pneumatically operatable actuating rod 8 is connected via an associated coupling rod joint 12a to a door opening drive gear 15, which is preferably embodied and, therefore, hereinafter also referred to as a direct drive gear. Accordingly, the actuator system 1 implements and is, therefore, hereinafter also referred to as a direct drive actuator system. In this direct drive actuator system 1, a linear movement of the pneumatically operatable actuating rod 8 is directly transformed into a door opening swivel motion of the suitable connection links 6, i.e. without requiring a conventional four-joint-gear.

More specifically, the direct drive gear 15 drivingly connects the pneumatically operatable actuating rod 8 to the suitable connection links 6. To this end, the direct drive gear 15 is provided with at least one coupling rod 12, which is preferably rotatably mounted to the associated coupling rod joint 12a of the pneumatically operatable actuating rod 8 by means of an associated plain bearing (21 in Figure 2). The at least one coupling rod 12 is further mounted to at least one torque lever 14 of the direct drive gear 15. The at least one torque lever 14 is preferably pivotally mounted in at least one hinge 16 of the stiff hinge arm 2 by means of at least one torsion bolt 13 of the direct drive gear 15. This at least one torsion bolt 13 is drivingly connectable and, by way of example, drivingly connected to the actuatable door 3, i.e. the door leaf 19. Preferably, the at least one torsion bolt 13 defines a main swivel axis (22 in Figure 2) for rotation of the at least one torque lever 14 in operation.

Figure 2 shows the direct drive actuator system 1 of Figure 1 with the pneumatically operatable actuating rod 8 and the direct drive gear 15 with the at least one coupling rod 12 of Figure 1. However, the actuatable door 3 and the associated door mounting structure 4 of Figure 1 have been omitted for simplicity and clarity of the drawings.

By way of example, Figure 2 illustrates the pneumatic cylinder 9 and the pressure pot 10 of Figure 1 in greater detail, which define the linear pneumatic actuator 7 of Figure 1. The pressure pot 10 is preferably rigidly attached to the pneumatic cylinder 9 and can, thus, be pivoted relative to the stiff hinge arm 2 of Figure 1 together with the pneumatic cylinder 9, which is pivotally mounted at its fixed end 11 to the stiff hinge arm 2. The latter illustratively comprises first and second bearings 5a, 5b at its mounting structure flank 17, which define the suitable door mounting structure bearings 5 of Figure 1.

According to one aspect, the direct drive actuator system 1 comprises at least a first torque lever 14a and a second torque lever 14b defining the at least one torque lever 14 of Figure 1. These first and second torque levers 14a, 14b are respectively connected to first and second axial ends 26a, 26b of the at least one coupling rod 12, which is illustratively embodied as a single linear cylindrical shaft. Preferably, the first and second torque levers 14a, 14b are embodied as linear flat connecting arms that are arranged at least approximately parallel to each other and at least approximately perpendicular to the linear cylindrical shaft 12.

Preferably, the first and second torque levers 14a, 14b are rigidly attached to the linear cylindrical shaft 12, which in turn is rotatably connected to the associated coupling rod joint 12a of the pneumatically operatable actuating rod 8 by means of an associated plain bearing 21, as described above with reference to Figure 1. Alternatively, the first and second torque levers 14a, 14b are rotatably mounted by means of associated spherical bearings 24a, 24b provided at the first and second axial ends 26a, 26b to the linear cylindrical shaft 12, which in turn is rigidly attached to the associated coupling rod joint 12a. Still alternatively, the linear cylindrical shaft 12 is rotatably connected to the associated coupling rod joint 12a by means of the associated plain bearing 21 and the first and second torque levers 14a, 14b are rotatably mounted to the linear cylindrical shaft 12 by means of the associated spherical bearings 24a, 24b, as illustrated by way of example in Figure 2.

According to one aspect, each one of the first and second torque levers 14a, 14b is pivotally mounted in an associated hinge 16a, 16b. These hinges 16a, 16b define the at least one hinge 16 of Figure 1. They are illustratively provided at laterally opposing sides of the door flank 18 of the stiff hinge arm 2.

Preferably, first and second torsion bolts 13a, 13b, which define the at least one torsion bolt 13 of Figure 1, are respectively rotatably accommodated in the hinges 16a, 16b. These first and second torsion bolts 13a, 13b are preferentially integral parts of the first and second torque levers 14a, 14b, i.e. embodied in a one-piece configuration therewith, and define a main swivel axis 22 for rotation of the first and second torque levers 14a, 14b, which is preferably at least approximately parallel to the linear cylindrical shaft 12.

Preferably, the first and second torsion bolts 13a, 13b are connected to associated first and second connection links 6a, 6b, which define the suitable connection links 6 of Figure 1. More specifically, the first and second torsion bolts 13a, 13b are respectively provided with first and second link bearings 23a, 23b, to which the first and second connection links 6a, 6b are either rotatably or rigidly attached. Via these first and second link bearings 23a, 23b, the first and second connection links 6a, 6b are preferably pivotally mounted to the first and second torsion bolts 13a, 13b.

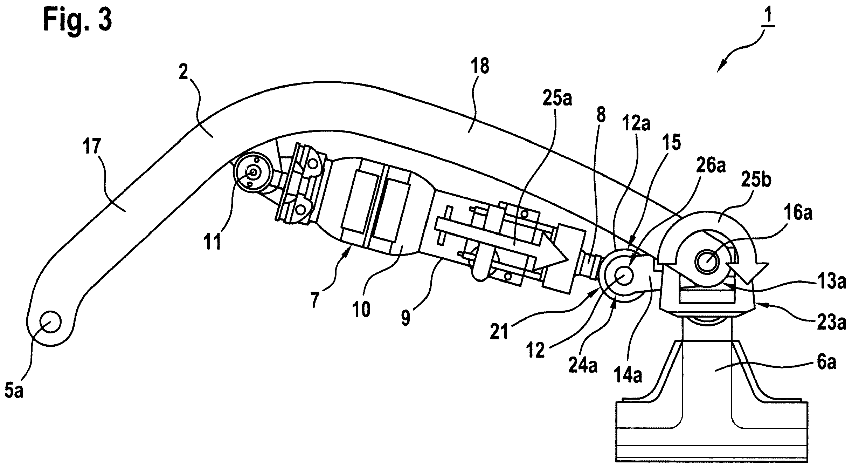

In operation of the direct drive actuator system 1, i.e. upon activation of the pressure pot 10, the pneumatically operatable actuating rod 8 is forced to move the linear cylindrical shaft 12 linearly in a direction that is at least approximately perpendicular to a longitudinal extension of this linear cylindrical shaft 12. In Figure 2, a corresponding linear movement would point coaxially to the pneumatically operatable actuating rod 8 towards the right hand side of the direct drive actuator system 1. A corresponding actuator force (25a in Figure 3) generated by the pneumatically operatable actuating rod 8 is split into two halves that are transferred to each one of the first and second torque levers 14a, 14b, which are therefore rotated around the main swivel axis 22 by means of the first and second torsion bolts 13a, 13b. Accordingly, the first and second connection links 6a, 6b are also rotated around the main swivel axis 22 and, thus, perform a door opening swivel motion, as described above with reference to Figure 1.

Figure 3 shows the direct drive actuator system 1 of Figure 2 with the pneumatically operatable actuating rod 8, the torque lever 14a, the torsion bolt 13a and the connection link 6a of Figure 2 for illustration of an exemplary operation thereof. As described above, the pneumatically operatable actuating rod 8 performs a linear movement when it is subjected to an actuator force 25a. This linear movement is performed in a direction that corresponds to an effective direction of the actuator force 25a and leads to a rotational movement of the torque lever 14a by means of the torsion bolt 13a, as described above, so that an opening momentum 25b for opening of the actuatable door 3 of Figure 1 is generated.

Figure 4 shows an aircraft 30 with an aircraft fuselage structure 31 that defines an aircraft cabin 32. Illustratively, this aircraft cabin 32 can be accessed via an actuatable cabin door 33.

According to one aspect, the aircraft 30 comprises an actuator system for actuation of the actuatable cabin door 33, e.g. in emergency cases. This actuator system is preferably implemented by the direct drive actuator system 1 of Figure 1 to Figure 3, so that the actuatable cabin door 33 represents the actuatable door 3 of Figure 1 and that the aircraft fuselage structure 31 represents the door mounting structure 4 of Figure 1.

It should be noted that modifications to the above described embodiments are within the common knowledge of the person skilled in the art and, thus, also considered as being part of the present invention.

### Reference List

- 1: direct drive actuator system
- 2: hinge arm
- 3: actuatable door
- 4: door mounting structure
- 5: door mounting structure bearings
- 5a: upper bearing
- 5b: lower bearing
- 6: actuatable door connection links
- 6a: upper connection link
- 6b: lower connection link
- 7: actuator
- 8: actuating rod
- 9: pneumatic cylinder
- 10: pressure pot
- 11: actuator fix end
- 12: coupling rod
- 13: torsion bolts
- 13a: upper torsion bolt
- 13b: lower torsion bolt
- 14: torque levers
- 14a: upper torque lever
- 14b: lower torque lever
- 15: door opening drive gear
- 16: hinges
- 16a: upper hinge
- 16b: lower hinge
- 17: door mounting structure flank
- 18: door flank
- 19: door leaf
- 20: door leaf connecting structure
- 21: coupling rod bearing
- 22: main swivel axis
- 23a: upper connection link bearing
- 23b: lower connection link bearing
- 24a: upper coupling rod bearing
- 24b: lower coupling rod bearing
- 25a: actuator force
- 25b: opening momentum
- 26a: upper axial end
- 26b: lower axial end
- 30: aircraft
- 31: aircraft fuselage structure
- 32: aircraft cabin
- 33: aircraft cabin door

## Claims

1. An aircraft door actuator system (1) for an actuatable door (3), said aircraft door actuator system (1) comprising a stiff hinge arm (2) with a door flank (18) and a mounting structure flank (17), said stiff hinge arm (2) being adapted to pivotally support said actuatable door (3) at said door flank (18) and to be pivotally mounted to an associated door mounting structure (4) at said mounting structure flank (17), wherein an actuator (7) with a pneumatically operatable actuating rod (8) is provided for assisting opening of said actuatable door (3) in a mounted state upon activation, said actuator (7) comprising a fixed end (11) that is mounted to said stiff hinge arm (2), and said pneumatically operatable actuating rod (8) comprising a coupling rod joint (12a) that is connected to a door opening drive gear (15), **characterized in that** said door opening drive gear (15) is provided with at least one coupling rod (12) that is connected to said coupling rod joint (12a) and mounted to at least one torque lever (14), said at least one torque lever (14) being pivotally mounted in at least one hinge (16) of said stiff hinge arm (2) by means of at least one torsion bolt (13) of said door opening drive gear (15), said at least one torsion bolt (13) being drivingly connectable to said actuatable door (3) by means of an associated connection link (6) that is pivotally mounted to said at least one torsion bolt (13).

2. The aircraft door actuator system (1) according to claim 1,
**characterized in that** said at least one coupling rod (12) is provided as a linear cylindrical shaft.

3. The aircraft door actuator system (1) according to claim 1,
**characterized in that** said at least one torque lever (14) is provided as a linear flat connecting arm (14a, 14b).

4. The aircraft door actuator system (1) according to claim 1,
**characterized in that** said at least one torsion bolt (13) defines a main swivel axis (22) for rotation of said at least one torque lever (14) in operation, said main swivel axis (22) being at least approximately parallel to said at least one coupling rod (12).

5. The aircraft door actuator system (1) according to claim 1,
**characterized in that** said pneumatically operatable actuating rod (8) is adapted to move said at least one coupling rod (12) upon activation linearly in a direction that is at least approximately perpendicular to a longitudinal extension of said at least one coupling rod (12), wherein said at least one coupling rod (12) rotates said at least one torque lever (14) around said main swivel axis (22).

6. The aircraft door actuator system (1) according to claim 1,
**characterized in that** said actuator (7) comprises a pressure pot (10) for actuation of said pneumatically operatable actuating rod (8) in operation.

7. The aircraft door actuator system (1) according to claim 1,
**characterized in that** said at least one torque lever (14) comprises at least a first torque lever (14a) and a second torque lever (14b), said first torque lever (14a) being connected to a first axial end (26a) of said at least one coupling rod (12) and said second torque lever (14a) being connected to a second axial end (26a) of said at least one coupling rod (12).

8. The aircraft door actuator system (1) according to claim 7,
**characterized in that** said first and second torque levers (14a, 14b) are arranged at least approximately parallel to each other and at least approximately perpendicular to said at least one coupling rod (12).

9. The aircraft door actuator system (1) according to claim 7,
**characterized in that** said at least one coupling rod (12) is rotatably mounted to said coupling rod joint (12a) by means of an associated plain bearing (21).

10. The aircraft door actuator system (1) according to claim 1,
**characterized in that** said at least one coupling rod (12) is rotatably mounted to said at least one torque lever (14) by means of an associated spherical bearing.

11. The aircraft door actuator system (1) according to claim 1,
**characterized in that** said fixed end (11) of said actuator (7) is rotatably mounted to said stiff hinge arm (2).

12. The aircraft door actuator system (1) according to claim 1,
**characterized in that** said actuatable door (3) is an aircraft cabin door and said associated door mounting structure (4) is an aircraft fuselage structure (31).

13. An aircraft (30) with an aircraft fuselage structure (31) and an actuatable cabin door (33), said aircraft (30) comprising an aircraft door actuator system (1) according to claim 1 for actuation of said actuatable cabin door (33).

## Patentansprüche

1. Flugzeugtürbetätigungssystem (1) für eine betätigbare Tür (3), wobei das Flugzeugtürbetätigungssystem (1) einen steifen Scharnierarm (2) mit einer Türflanke (18) und einer Befestigungsstrukturflanke (17) umfasst, wobei der steife Scharnierarm (2) eingerichtet ist, um die betätigbare Tür (3) an der Türflanke (18) schwenkbar zu tragen und an einer zugeordneten Türbefestigungsstruktur (4) an der Befestigungsstrukturflanke (17) schwenkbar montiert zu werden, wobei ein Stellglied (7) mit einer pneumatisch betätigbaren Betätigungsstange (8) vorgesehen ist, um in einem montierten Zustand bei Aktivierung das Öffnen der betätigbaren Tür (3) zu unterstützen, wobei das Stellglied (7) ein festes Ende (11) umfasst, das an dem steifen Scharnierarm (2) montiert ist, und die pneumatisch betätigbare Betätigungsstange (8) ein Koppelstangengelenk (12a) umfasst, das mit einem Türöffnungsantriebsgetriebe (15) verbunden ist,
**dadurch gekennzeichnet, dass** das Türöffnungsantriebsgetriebe (15) mit mindestens einer Koppelstange (12) versehen ist, die mit dem Koppelstangengelenk (12a) verbunden und an mindestens einem Drehmomenthebel (14) montiert ist, der mindestens eine Drehmomenthebel (14) in mindestens einem Scharnier (16) des steifen Scharnierarms (2) mittels mindestens einer Torsionsschraube (13) des Türöffnungsantriebsgetriebes (15) schwenkbar gelagert ist, wobei die mindestens eine Torsionsschraube (13) über eine zugehörige Verbindungsstange (6), die schwenkbar an der mindestens einen Torsionsschraube (13) befestigt ist, mit der betätigbaren Tür (3) antriebsverbindbar ist.

2. Flugzeugtürbetätigungssystem (1) nach Anspruch 1,
**dadurch gekennzeichnet, dass** die mindestens eine Koppelstange (12) als lineare zylindrische Welle vorgesehen ist.

3. Flugzeugtürbetätigungssystem (1) nach Anspruch 1, **dadurch gekennzeichnet, dass** der mindestens eine Drehmomenthebel (14) als linearer flacher Verbindungsarm (14a, 14b) vorgesehen ist.

4. Flugzeugtürbetätigungssystem (1) nach Anspruch 1, **dadurch gekennzeichnet, dass** die mindestens eine Torsionsschraube (13) eine Hauptschwenkachse (22) zum Drehen des mindestens einen Drehmomenthebels (14) im Betrieb definiert, wobei die Hauptschwenkachse (22) mindestens annähernd parallel zu der mindestens einen Koppelstange (12) verläuft.

5. Flugzeugtürbetätigungssystem (1) nach Anspruch 1, **dadurch gekennzeichnet, dass** die pneumatisch betätigbare Betätigungsstange (8) eingerichtet ist, um die mindestens eine Koppelstange (12) bei Betätigung linear in eine Richtung zu bewegen, die mindestens annähernd senkrecht zu einer Längserstreckung der mindestens einen Koppelstange (12) ist, wobei die mindestens eine Koppelstange (12) den mindestens einen Drehmomenthebel (14) um die Hauptschwenkachse (22) dreht.

6. Flugzeugtürbetätigungssystem (1) nach Anspruch 1, **dadurch gekennzeichnet, dass** das Stellglied (7) einen Druckbehälter (10) zum Betätigen der pneumatisch betätigbaren Betätigungsstange (8) im Betrieb umfasst.

7. Flugzeugtürbetätigungssystem (1) nach Anspruch 1, **dadurch gekennzeichnet, dass** der mindestens eine Drehmomenthebel (14) mindestens einen ersten Drehmomenthebel (14a) und einen zweiten Drehmomenthebel (14b) umfasst, wobei der erste Drehmomenthebel (14a) mit einem ersten axialen Ende (26a) der mindestens einen Koppelstange (12) und der zweite Drehmomenthebel (14a) mit einem zweiten axialen Ende (26a) der mindestens einen Koppelstange (12) verbunden ist.

8. Flugzeugtürbetätigungssystem (1) nach Anspruch 7,
**dadurch gekennzeichnet, dass** der erste und der zweite Drehmomenthebel (14a, 14b) mindestens annähernd parallel zueinander und mindestens annähernd senkrecht zu der mindestens einen Koppelstange (12) angeordnet sind.

9. Flugzeugtürbetätigungssystem (1) nach Anspruch 7,
**dadurch gekennzeichnet, dass** die mindestens eine Koppelstange (12) mittels eines zugeordneten Gleitlagers (21) drehbar an dem Koppelstangengelenk (12a) befestigt ist.

10. Flugzeugtürbetätigungssystem (1) nach Anspruch 1,
**dadurch gekennzeichnet, dass** die mindestens eine Koppelstange (12) mittels eines zugeordneten Gelenklagers drehbar an dem mindestens einen Drehmomenthebel (14) befestigt ist.

11. Flugzeugtürbetätigungssystem (1) nach Anspruch 1,
**dadurch gekennzeichnet, dass** das feste Ende (11) des Stellglieds (7) drehbar an dem steifen Scharnierarm (2) befestigt ist.

12. Flugzeugtürbetätigungssystem (1) nach Anspruch 1,
**dadurch gekennzeichnet, dass** die betätigbare Tür (3) eine Flugzeugkabinentür ist und die zugehörige Türbefestigungsstruktur (4) eine Flugzeugrumpfstruktur (31) ist.

13. Flugzeug (30) mit einer Flugzeugrumpfstruktur (31) und einer betätigbaren Kabinentür (33), wobei das Flugzeug (30) ein Flugzeugtürbetätigungssystem (1) nach Anspruch 1 zur Betätigung der betätigbaren Kabinentür (33) umfasst..

## Revendications

1. Système d'actionneur de porte d'aéronef (1) pour une porte actionnable (3), ledit système d'actionneur de porte d'aéronef (1) comprenant un bras rigide d'articulation (2) avec un flanc de porte (18) et un flanc de structure de montage (17), ledit bras rigide d'articulation (2) étant adapté pour supporter à pivotement ladite porte actionnable (3) au niveau dudit flanc de porte (18) et pour être monté à pivotement sur une structure de montage de porte associée (4) au niveau dudit flanc de structure de montage (17), dans lequel un actionneur (7) avec une bielle d'actionnement à fonctionnement pneumatique (8) est prévu pour assister l'ouverture de ladite porte actionnable (3) dans un état monté lorsqu'il est actionné, ledit actionneur (7) comprenant une extrémité fixe (11) qui est montée sur ledit bras rigide d'articulation (2), et ladite bielle d'actionnement à fonctionnement pneumatique (8) comprenant une articulation de bielle d'accouplement (12a) qui est raccordée à un mécanisme d'entrainement d'ouverture de porte (15), **caractérisé en ce que** ledit mécanisme d'entrainement d'ouverture de porte (15) est prévu avec au moins une bielle d'accouplement (12) qui est raccordée à ladite articulation de bielle d'accouplement (12a) et monté sur au moins un levier de couple (14), ledit au moins un levier de couple (14) étant monté à pivotement sur au moins une articulation (16) dudit bras rigide d'articulation (2) au moyen d'au moins un axe de torsion (13) dudit mécanisme d'entrainement d'ouverture de porte (15), ledit au moins un axe de torsion (13) pouvant être raccordé par entrainement à ladite porte actionnable (3) au moyen d'une biellette de raccordement associée (6) qui est montée à pivotement sur ledit au moins un axe de torsion (13).

2. Système d'actionneur de porte d'aéronef (1) selon la
revendication 1,
**caractérisé en ce que** ladite au moins une bielle d'accouplement (12) est prévue sous la forme d'un arbre cylindrique linéaire.

3. Système d'actionneur de porte d'aéronef (1) selon la
revendication 1,
**caractérisé en ce que** ledit au moins un levier de couple (14) est prévu sous la forme d'un bras de raccordement plat linéaire (14a, 14b).

4. Système d'actionneur de porte d'aéronef (1) selon la
revendication 1,
**caractérisé en ce que** ledit au moins un axe de torsion (13) définit un axe de pivotement principal (22) pour la rotation dudit au moins un levier de couple (14) en fonctionnement, ledit axe de pivotement principal (22) étant au moins approximativement parallèle à ladite au moins une bielle d'accouplement (12).

5. Système d'actionneur de porte d'aéronef (1) selon la
revendication 1,
**caractérisé en ce que** ladite bielle d'actionnement à fonctionnement pneumatique (8) est adaptée pour déplacer de façon linéaire ladite au moins une bielle d'accouplement (12) lorsqu'elle est actionnée dans une direction qui est au moins approximativement perpendiculaire à un prolongement longitudinal de ladite au moins une bielle d'accouplement (12), dans lequel ladite au moins une bielle d'accouplement (12) fait pivoter ledit au moins un levier de couple (14) autour dudit axe de pivotement principal (22).

6. Système d'actionneur de porte d'aéronef (1) selon la
revendication 1,
**caractérisé en ce que** ledit actionneur (7) comprend un réservoir de pression (10) pour l'actionnement de ladite bielle d'actionnement à fonctionnement pneumatique (8) en fonctionnement.

7. Système d'actionneur de porte d'aéronef (1) selon la
revendication 1,
**caractérisé en ce que** ledit au moins un levier de couple (14) comprend au moins un premier levier de couple (14a) et un second levier de couple (14b), ledit premier levier de couple (14a) étant raccordé à une première extrémité axiale (26a) de ladite au moins une bielle d'accouplement (12) et ledit second levier de couple (14a) étant raccordé à une seconde extrémité axiale (26a) de ladite au moins une bielle d'accouplement (12).

8. Système d'actionneur de porte d'aéronef (1) selon la
revendication 7,
**caractérisé en ce que** lesdits premier et second leviers de couple (14a, 14b) sont agencés au moins approximativement parallèlement l'un par rapport à l'autre et approximativement perpendiculairement à ladite au moins une bielle d'accouplement (12).

9. Système d'actionneur de porte d'aéronef (1) selon la
revendication 7,
**caractérisé en ce que** ladite au moins une bielle d'accouplement (12) est montée à pivotement sur ladite articulation de bielle d'accouplement (12a) au moyen d'un palier lisse associé (21).

10. Système d'actionneur de porte d'aéronef (1) selon la
revendication 1,
**caractérisé en ce que** ladite au moins une bielle d'accouplement (12) est montée à pivotement sur ledit au moins un levier de couple (14) au moyen d'un palier à rotule associé.

11. Système d'actionneur de porte d'aéronef (1) selon la
revendication 1,
**caractérisé en ce que** ladite extrémité fixe (11) dudit actionneur (7) est montée à pivotement sur ledit bras rigide d'articulation (2).

12. Système d'actionneur de porte d'aéronef (1) selon la
revendication 1,
**caractérisé en ce que** ladite porte actionnable (3) est une porte de cabine d'aéronef et ladite structure de montage de porte associée (4) est une structure de fuselage d'aéronef (31).

13. Aéronef (30) avec une structure de fuselage d'aéronef (31) et une porte de cabine actionnable (33), ledit aéronef (30) comprenant un système d'actionneur de porte d'aéronef (1) selon la revendication 1 pour actionner ladite porte de cabine actionnable (33).
